# EUROPÄISCHE PATENTSCHRIFT

(11) **EP 1 149 806 B1**
(45) Veröffentlichungstag und Bekanntmachung des Hinweises auf die Patenterteilung: **24.08.2005**
(21) Anmeldenummer: 01103159.8
(22) Anmeldetag: 10.02.2001
(51) Int. Cl.: C03B 9/38

(54) **Kühlvorrichtung für eine mit einer Mündungsform versehene Vorform einer IS-Glasmaschine**
Apparatus for cooling a blank mold provided with a neck mold in an I.S. machine
Dispositif de refroidissement d' un moule ébaucher pourvu d' un moule de bague dans une machine I.S

(30) Priorität: 26.04.2000 DE 10020431
(43) Veröffentlichungstag der Anmeldung: 31.10.2001
(73) Patentinhaber: GPS GLASPRODUKTIONS-SERVICE GMBH, 45329 Essen (DE)
(72) Erfinder: Emrath, Norbert, 45721 Haltern (DE)
(74) Vertreter: Lelgemann, Karl-Heinz

(56) Entgegenhaltungen:
- EP-A- 0 297 021

## Beschreibung

Die Erfindung bezieht sich auf eine Kühlvorrichtung für eine mit einer Mündungsform versehene Vorform einer IS-Glasmaschine, mit einem vorderen Kühlluftzufuhrkanal, der ventilgesteuert mit Kühlluft beaufschlagbar ist, einem hinteren Kühlluftzufuhrkanal, der ventilgesteuert mit Kühlluft beaufschlagbar ist, einer Vorformkühlkammer, mittels der das Kühlluftdruckniveau ausgleichbar und durch die hindurch Kühlkanäle der Vorform mit Kühlluft beaufschlagbar sind, und einer Mündungskühldüse, durch die hindurch die Mündungsform der Vorform unmittelbar mit Kühlluft beaufschlagbar ist.

Bei derartigen bekannten Kühlvorrichtungen soll mittels der Mündungskühldüse und des an diese angeschlossenen Kühlluftzufuhrkanals sichergestellt werden, daß in jedem Fall der für die Ausgestaltung des Mündungsabschnitts des an der IS-Glasmaschine herzustellenden Glasartikels besonders wichtige Abschnitt der Vorform bzw. der Mündungsform zuverlässig und in jedem Falle ausreichend mit Kühlluft beaufschlagt wird. Der übrige Abschnitt der Vorform wird durch die Vorformkuhlkammer mit Kühlluft beaufschlagt, wobei durch die Vorformkühlkammer sämtliche Kühlkanäle einer Vorform mit Kühlluft versorgt werden. Die Vorformkühlluftkammer ist bei mit Mündungskühldüsen ausgerüsteten Kühlvorrichtungen in - in Axialrichtung der Vorform gesehen - dem der Mündungsform entfernten Abschnitt bzw. Bereich der Vorform angeordnet.

Der Erfindung liegt die Aufgabe zugrunde, die vorstehend erläuterte Kühlvorrichtung für eine mit einer Mündungsform versehene Vorform einer IS-Glasmaschine derart weiterzubilden, daß die Kühlung der Vorform insbesondere im Bereich der Mündung des herzustellenden Glasartikels effektiver gekühlt werden kann.

Diese Aufgabe wird erfindungsgemäß dadurch gelöst, daß die Vorformkühlkammer an einem in Axialrichtung der Vorform der Mündungsform benachbarten Bereich der Vorform angeordnet ist. Durch den dadurch entstehenden Kühllufteintritt aus der Vorformkühlkammer an die unteren Enden der Kühlkanäle der Vorform wird derjenige Bereich der Vorform, der nahe der Mündung des herzustellenden Glasartikels angeordnet ist, effektvoller gekühlt, da die mit diesem Bereich zusammenwirkende Kühlluft noch weitestgehend unerwärmt ist.

Bei einer besonders vorteilhaften Ausgestaltung der erfindungsgemäßen Kühlvorrichtung weist die Vorformkühlkammer an ihrer der Vorform abgewandten Grundwand einen Kühlluftdurchtritt auf.

Dieser Kühlluftdurchtritt kann zweckmäßigerweise in bezug auf die Vorform nahe der äußeren Umfangswand der Vorformkühlkammer in der Grundwand angeordnet sein.

Die Vorformkühlkammer kann an den vorderen Kühlluftzufuhrkanal, dementsprechend dann die Mündungskühldüse an den hinteren Kühlluftzufuhrkanal angeschlossen sein.

Zur Steuerung bzw. Regelung des Kühllufteintritts in den vorderen Kühlluftzufuhrkanal ist es vorteilhaft, wenn am Kühllufteintritt des vorderen Kühlluftzufuhrkanals ein Kühlluftschaltzylinder angeordnet ist, mittels dem die Kühlluftbeaufschlagung des vorderen Kühlluftzufuhrkanals steuerbar ist. Entsprechend gilt, daß zweckmäßigerweise am Kühllufteintritt des hinteren Kühlluftzufuhrkanals ein zweiter Kühlluftschaltzylinder angeordnet ist, mittels dem die Kühlluftbeaufschlagung des hinteren Kühlluftzufuhrkanals gesteuert werden kann.

Zur Anpassung an jedes denkbare Anforderungsprofil ist es zweckmäßig, wenn der dem vorderen Kühlluftzufuhrkanal zugeordnete erste und der dem hinteren Kühlluftzufuhrkanal zugeordnete zweite Kühlluftschaltzylinder getrennt voneinander ansteuerbar sind.

Vorteilhaft weist jeder Kühlluftschaltzylinder ein Ventilglied, mittels dem der Kühllufteintritt des ihm zugeordneten Kühlluftzufuhrkanals öffen- und schließbar ist, und einen Stellkolben auf, der in einem Zylindergehäuse verschieblich angeordnet ist.

Um mittels einer mechanisch-konstruktiv wenig aufwendigen Ausgestaltung dennoch eine zuverlässige Funktionsweise der Kühlluftschaltzylinder gewährleisten zu können, ist der Stellkolben jedes Kühlluftschaltzylinders einerseits mittels einer Federeinrichtung beaufschlagt, die das Ventilglied in Richtung auf eine den Kühllufteintritt des zugeordneten Kühlluftzufuhrkanals verschließende Stellung vorspannt, und andererseits ist der Stellkolben durch Druckluft beaufschlagbar, mittels der der Stellkolben aus einer Position, in der das Ventilglied den Kühllufteintritt des zugeordneten Kühlluftzufuhrkanals schließt, gegen die Kraft der Federeinrichtung in eine Position verstellbar ist, in der das Ventilglied den Kühllufteintritt des zugeordneten Kühlluftzufuhrkanals freigibt.

Das Ventilglied jedes Kühlluftschaltzylinders läßt sich vorteilhaft als Ventilplatte ausgestalten, die zur Abdichtung des Kühllufteintritts gegen eine dem Kühlluftschaltzylinder zugewandte Ringfläche des Kühllufteintritts in Anlage bringbar ist.

Der vordere Kühlluftzufuhrkanal hat vorteilhaft ein Teleskoprohr, das zwischen dem Kühllufteintritt und dem Kühlluftdurchtritt in die Vorformkühlkammer angeordnet ist.

Zur Anpassung an unterschiedlich gestaltete Mündungsbereiche von Vorformen bzw. von mit diesen herzustellenden Glasartikeln ist die Mündungskühldüse in Axialrichtung der Vorform verstellbar.

Im folgenden wird die Erfindung an Hand einer Ausführungsform unter Bezugnahme auf die Zeichnung näher erläutert.

Es zeigen:
- Figur 1: eine Draufsicht auf eine mit einer erfindungsgemäßen Kühlvorrichtung ausgerüstete Vorformstation einer IS-Glasmaschine;
- Figur 2: eine Schnittdarstellung des Verlaufs sowie der Anschlüsse eines vorderen Kühlluftzufuhrkanals der in Figur 1 gezeigten erfindungsgemäßen Kühlvorrichtung; und
- Figur 3: eine Schnittdarstellung des Verlaufs und der Anschlüsse eines hinteren Kühlluftzufuhrkanals der in Figur 1 gezeigten erfindungsgemäßen Kühlvorrichtung.
Eine an Hand der Figuren 1 bis 3 dargestellte erfindungsgemäße Kühlvorrichtung dient zur Kühlung von Vorformen 1 einer in den Figuren 1 bis 3 lediglich hinsichtlich ihrer für die vorliegende Erfindung wesentlichen Bestandteile dargestellten IS-Glasmaschine.

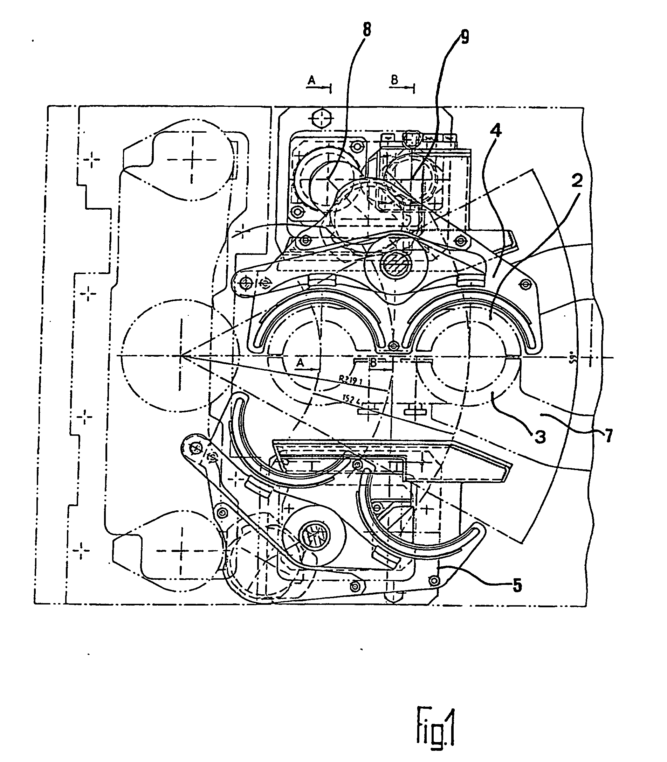

Jede Vorform 1 gliedert sich in zwei Vorformhälften 2, 3, welche in Vorformhaltern 4, 5 gehaltert sind. Die Vorformhalter 4, 5 sind aufeinander zu- und voneinander wegbewegbar, um die Vorformen 1 zu schließen bzw. zu öffnen. In Figur 1 ist der in der Figur obere Vorformhalter 4 in seiner Schließ-, der in der Figur untere Vorformhalter 5 in seiner Öffnungsstellung dargestellt.

Jeder Vorform 1 ist eine Mündungsform 6 zugeordnet; die Mündungsformen 6 sind in einem lediglich in Figur 1 im Prinzip dargestellten Mündungsringhalter 7 angebracht.

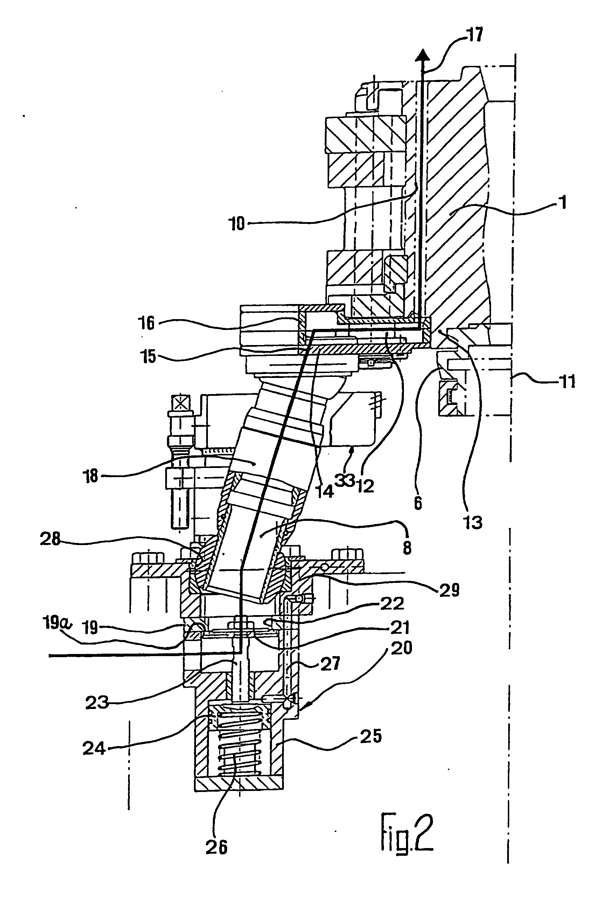

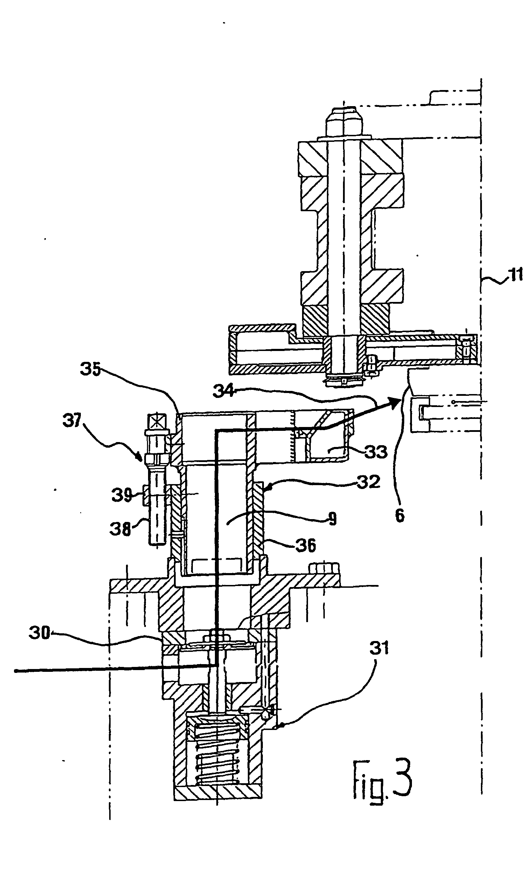

Zur Kühlung der Vorformen 1 bzw. der Mündungsformen 6 weist die in Figur 1 in Draufsicht gezeigte Station der IS-Glasmaschine einen vorderen Kühlluftzufuhrkanal 8, der im einzelnen in Figur 2 dargestellt ist, und einen hinteren Kühlluftzufuhrkanal 9 auf, der im einzelnen in Figur 3 dargestellt ist.

Jede Vorform 1 ist mit Kühlkanälen 10 versehen, die die Vorform parallel zur Axialrichtung 11 derselben durchlaufen und die an eine Vorformkühlkammer 12 angeschlossen sind. Mittels dieser Vorformkühlkammer 12 werden sämtliche in Umfangsrichtung der Vorform 1 verteilt angeordnete Kühlkanäle 10 mit Kühlluft versorgt.

Die Vorformkühlkammer 12 ist - in Axialrichtung der Vorform 1 gesehen - an demjenigen Bereich 13 der Vorform 1 angeordnet, der nahe der der jeweiligen Vorform 1 zugeordneten Mündungsform 6 angeordnet ist. Im in Figur 2 dargestellten Ausführungsbeispiel fluchtet die Außenseite einer Grundwand 14 der Vorformkühlkammer 12 praktisch mit der mündungsformseitigen Stirnwand der Vorform 1.

Die der Vorform 1 zugeordnete Vorformkühlkammer 12 ist mittels eines in ihrer Grundwand 14 ausgebildeten Kühlluftdurchtritts 15 an den vorderen Kühlluftzufuhrkanal 8 angeschlossen. Der Kühlluftdurchtritt 15 ist in der Grundwand 14 der Vorformkühlkammer 12 in einem in bezug auf die Vorform 1 radialen Außenbereich ausgebildet und ist daher nahe einer äußeren Umfangswand 16 der Vorformkühlkammer 12 angeordnet.

Durch die Anordnung der Vorformkühlkammer 12 nahe der Mündungsform 6 bzw. am mündungsformseitigen Endabschnitt der Vorform 1 wird erreicht, daß die in die Vorformkühlkammer 12 eintretende und zur Kühlung der Vorform 1 bestimmte Kühlluft zunächst den Bereich 13 der Vorform 1 kühlt, bei dem es sich um einen aufgrund seiner Nähe zur Mündungsform 6 besonders problematischen Bereich der Vorform 1 handelt. Durch die vorstehend geschilderte Anordnung der Vorformkühlkammer 12 wird somit sichergestellt, daß die Kühlluft ihre größte Kühlwirkung in dem problematischen Bereich 13 nahe der Mündungsform 6 aufweist. Erst dann werden die weniger problematischen Bereiche der Vorform 1 gekühlt, bevor die Kühlluft, wie durch den Pfeil 17 in Figur 2 gezeigt, die Kühlkanäle 10 der Vorform 1 verläßt.

Der vordere Kühlluftzufuhrkanal 8 gliedert sich im dargestellten Ausführungsbeispiel im wesentlichen in ein Teleskoprohr 18 und einen Kühllufteintritt 19.

Dem Kühllufteintritt 19 ist ein erster Kühlluftschaltzylinder 20 zugeordnet. Der erste Kühlluftschaltzylinder hat ein Ventilglied in Form einer Ventilplatte 21, mittels der eine Eintrittsöffnung 22 des Kühllufteintritts 19 geöffnet und geschlossen werden kann, wobei die Ventilplatte 21 gegen eine dem Kühlluftschaltzylinder 20 zugewandte Ringfläche 19a des Kühllufteintritts 19 abdichtet. Hierzu sitzt die Ventilplatte 21 fest am freien Ende eines Stellelements 23 eines Stellkolbens 24, der in einem Zylindergehäuse 25 verstellbar angeordnet ist.

Der Stellkolben 24 ist bei der in Figur 2 gezeigten Ausführungsform an seiner seinem Stellelement 23 abgewandten Seite mittels einer Federeinrichtung, die als Schraubenfeder 26 ausgebildet ist, dauerhaft so vorgespannt, daß er die Ventilplatte 21 am freien Ende seines Stellelements 23 in eine die Eintrittsöffnung 22 des Kühllufteintritts 19 schließende Stellung drückt.

Auf seiner der Schraubenfeder 26 abgewandten Seite ist der Stellkolben 24 durch einen Druckluftkanal 27 mit Druckluft beaufschlagbar, wobei die Druckluftbeaufschlagung ausreichend ist, um den Stellkolben 24 gegen die Kraft der ihm zugeordneten Schraubenfeder 26 in Figur 2 abwärts zu versetzen, so daß die Ventilplatte 21 am freien Ende des Stellelementes 23 des Stellkolbens 24 die Eintrittsöffnung 22 des Kühllufteintritts 19 freigibt, womit Kühlluft in den Kühllufteintritt 19 des vorderen Kühlluftzufuhrkanals 8 strömen kann.

Aus dem Kühllufteintritt 19 strömt die Kühlluft aufwärts in das Teleskoprohr 18, welches durch eine geeignete Kugelsegmentlagerung 28 in bestimmten Grenzen schwenkbar an Rahmenteilen 29 der entsprechenden Station der IS-Glasmaschine gehaltert ist.

Durch das Teleskoprohr 18 tritt die Kühlluft über den Kühlluftdurchtritt 15 in die Vorformkühlkammer 12 der Vorform 1 ein.

Bei dem in Figur 3 im Prinzip dargestellten hinteren Kühlluftzufuhrkanal 9 ist ein Kühllufteintritt 30 vorgesehen, welcher einen zweiten Kühlluftschaltzylinder 31 aufweist, der hinsichtlich seiner Bauart, seiner einzelnen Bauteile und seiner Funktionsweise dem vorstehend erläuterten ersten Kühlluftschaltzylinder 20 des vorderen Kühlluftzufuhrkanals 8 entspricht; auf eine eingehendere Beschreibung der Funktionsweise des Kühllufteintritts 30 des hinteren Kühlluftzufuhrkanals 9 sowie des diesem zugeordneten zweiten Kühlluftschaltzylinders 31 wird daher an dieser Stelle zur Vermeidung von Wiederholungen verzichtet.

Es sei darauf hingewiesen, daß der zweite Kühlluftschaltzylinder 31 unabhängig vom ersten Kühlluftschaltzylinder 20 ansteuerbar ist, so daß der vordere Kühlluftzufuhrkanal 8 und der hintere Kühlluftzufuhrkanal 9 separat mit Kühlluft beaufschlagbar sind.

Der hintere Kühlluftzufuhrkanal 9 hat ein Kanalrohr 32, welches zwischen dem Kühllufteintritt 30 des hinteren Kühlluftzufuhrkanals 9 und einer Mündungskühldüse 33 angeordnet ist, durch die hindurch die Mündungsform 6 der jeweiligen Vorform 1 unmittelbar mit Kühlluft beaufschlagbar ist, wie durch den Pfeil 34 in Figur 3 dargestellt.

Das Kanalrohr 32 des hinteren Kühlluftzufuhrkanals 9 ist in Vertikalrichtung längenverstellbar ausgebildet. Hierzu ist zwischen einem oberen Rohrteil 35 und einem unteren Rohrteil 36 des Kanalrohrs 32 eine Verstelleinrichtung 37 in Form einer Langschraube vorgesehen, die am oberen Rohrteil 35 axialfest gehaltert und mit einem Gewindeabschnitt 38 eine fest mit dem unteren Rohrteil 36 verbundene Mutter 39 durchgreift. Bei Drehung der Langschraube 37 ergibt sich somit eine Veränderung der Vertikalposition des oberen Rohrteils 35 in bezug auf die des unteren Rohrteils 36.

Hierdurch ist es möglich, die vertikale Position der mit dem Kanalrohr 32 verbundenen Mündungskühldüse 33 an die jeweilige Anordnung der Mündungsform 6 der Vorform 1 anzupassen.

## Patentansprüche

1. Kühlvorrichtung für eine mit einer Mündungsform (6) versehene Vorform (1) einer IS-Glasmaschine, mit einem vorderen Kühlluftzufuhrkanal (8), der ventilgesteuert mit Kühlluft beaufschlagbar ist, einem hinteren Kühlluftzufuhrkanal (9), der ventilgesteuert mit Kühlluft beaufschlagbar ist, einer Vorformkühlkammer (12), mittels der das Kühlluftdruckniveau ausgleichbar und durch die hindurch Kühlkanäle (10) der Vorform (1) mit Kühlluft beaufschlagbar sind, und einer Mündungskühldüse (33), durch die hindurch die Mündungsform (6) der Vorform (1) unmittelbar mit Kühlluft beaufschlagbar ist, **dadurch gekennzeichnet, daß** die Vorformkühlkammer (12) an einem in Axialrichtung (11) der Vorform (1) der Mündungsform (6) benachbarten Bereich (13) der Vorform (1) angeordnet ist.

2. Kühlvorrichtung nach Anspruch 1, bei der die Vorformkühlkammer (12) an ihrer der Vorform (1) abgewandten Grundwand (14) einen Kühlluftdurchtritt (15) aufweist.

3. Kühlvorrichtung nach Anspruch 2, bei der der in der Grundwand (14) der Vorformkühlkammer (12) ausgebildete Kühlluftdurchtritt (15) nahe der in bezug auf die Vorform (1) äußeren Umfangswand (16) der Vorformkühlkammer (12) angeordnet ist.

4. Kühlvorrichtung nach einem der Ansprüche 1 bis 3, bei der die Vorformkühlkammer(12) an den vorderen Kühlluftzufuhrkanal (8) angeschlossen ist.

5. Kühlvorrichtung nach einem der Ansprüche 1 bis 4, bei der die Mündungskühldüse (33) an den hinteren Kühlluftzufuhrkanal (9) angeschlossen ist.

6. Kühlvorrichtung nach einem der Ansprüche 1 bis 5, bei der am Kühllufteintritt (19) des vorderen Kühlluftzufuhrkanals (8) ein erster Kühlluftschaltzylinder (20) angeordnet ist, mittels dem die Kühlluftbeaufschlagung des vorderen Kühlluftzufuhrkanals (8) steuerbar ist.

7. Kühlvorrichtung nach einem der Ansprüche 1 bis 6, bei der am Kühllufteintritt (30) des hinteren Kühlluftzufuhrkanals (9) ein zweiter Kühlluftschaltzylinder (31) angeordnet ist, mittels dem die Kühlluftbeaufschlagung des hinteren Kühlluftzufuhrkanals (9) steuerbar ist.

8. Kühlvorrichtung nach Anspruch 6 oder 7, bei der der dem vorderen Kühlluftzufuhrkanal (8) zugeordnete erste (20) und der dem hinteren Kühlluftzufuhrkanal (9) zugeordnete zweite Kühlluftschaltzylinder (31) getrennt voneinander ansteuerbar sind.

9. Kühlvorrichtung nach einem der Ansprüche 6 bis 8, bei der jeder Kühlluftschaltzylinder (20) bzw. (31) ein Ventilglied (21), mittels dem der Kühllufteintritt (19) bzw. (30) des ihm zugeordneten Kühlluftzufuhrkanals (8) bzw. (9) öffen- und schließbar ist, und einen Stellkolben (24) aufweist, der in einem Zylindergehäuse (25) verschieblich angeordnet ist.

10. Kühlvorrichtung nach Anspruch 9, bei der der Stellkolben (24) jedes Kühlluftschaltzylinders (20) bzw. (31) einerseits mittels einer Federeinrichtung (26) beaufschlagt ist, die das Ventilglied (21) in Richtung auf eine den Kühllufteintritt (19) bzw. (30) des zugeordneten Kühlluftzufuhrkanals (8) bzw. (9) verschließende Stellung vorspannt, und andererseits durch Druckluft beaufschlagbar ist, mittels der der Stellkolben (24) aus einer Position, in der das Ventilglied (21) den Kühllufteintritt (19) bzw. (30) des zugeordneten Kühlluftzufuhrkanals (8) bzw. (9) schließt, gegen die Kraft der Federeinrichtung (26) in eine Position verstellbar ist, in der das Ventilglied (21) den Kühllufteintritt (19) bzw. (30) des zugeordneten Kühlluftzufuhrkanals (8) bzw. (9) freigibt.

11. Kühlvorrichtung nach Anspruch 9 oder 10, bei der das Ventilglied (21) jedes Kühlluftschaltzylinders (20 bzw. 31) als Ventilplatte (21) ausgebildet und zur Abdichtung des Kühllufteintritts (19 bzw. 30) gegen eine dem Kühlluftschaltzylinder (20 bzw. 31) zugewandte Ringfläche (19a) des Kühllufteintritts (19 bzw. 30) in Anlage bringbar ist.

12. Kühlvorrichtung nach einem der Ansprüche 1 bis 11, bei der der vordere Kühlluftzufuhrkanal (8) ein Teleskoprohr (18) aufweist, das zwischen dem Kühllufteintritt (19) und dem Kühlluftdurchtritt (15) in die Vorformkühlkammer (12) angeordnet ist.

13. Kühlvorrichtung nach einem der Ansprüche 1 bis 12, bei der die Mündungskühldüse (33) in Axialrichtung (11) der Vorform (1) verstellbar ist.

## Claims

1. A cooling device for an IS type glass machine mould (1) provided with a neck ring (6), having a front cooling air inflow channel (8) that is chargeable with cooling air and controllable with a valve, a rear cooling air inflow channel (9) that is chargeable with cooling air and controllable with a valve, a mould annealing lehr (12) via which the cooling air pressure level can be equalized and through which cooling channels (10) in the mould (1) are chargeable with cooling air, and a neck ring cooling nozzle (33) through which the neck ring (6) of the mould (1) is directly chargeable with cooling air, **characterised in that** the mould annealing lehr (12) is arranged on an area (13) of the mould (1) that is adjacent the neck ring (6) in the axial direction (11) of the mould (1).

2. The cooling device according to claim 1, in which the base wall (14) of the mould annealing lehr (12) facing away from the mould (1) has a cooling air passage (15).

3. The cooling device according to claim 2, in which the cooling air passage (15) conformed in the base wall (14) of the mould annealing lehr (12) is arranged close to the outer peripheral wall (16) of the mould annealing lehr (12) relative to the mould (1).

4. The cooling device according to any of claims 1 to 3, in which the mould annealing lehr (12) communicates with the front cooling air inflow channel (8).

5. The cooling device according to any of claims 1 to 4, in which the neck ring cooling nozzle (33) communicates with the rear cooling air inflow channel (9).

6. The cooling device according to any of claims 1 to 5, in which a first cooling air switching cylinder (20) is arranged at the cooling air inflow (19) of the front cooling air inflow channel (8), via which the cool air charging of front cooling air inflow channel (8) is controllable.

7. The cooling device according to any of claims 1 to 6, in which a second cooling air switching cylinder (31) is arranged at the cooling air inflow (30) of the rear cooling air inflow channel (9), via which the cool air charging of rear cooling air inflow channel (9) is controllable.

8. The cooling device according to claim 6 or 7, in which the first cool air switching cylinder (20), which is assigned to the front cooling air inflow channel (8), and the second cool air switching cylinder (31), which is assigned to the rear cooling air inflow channel (9), can be controlled independently of one another.

9. The cooling device according to any of claims 6 to 8, in which each cool air switching cylinder (20) or (31) is equipped with a valve element (21), via which the cooling air inflow (19) or (30) of the cooling air inflow channel (8) or (9) assigned thereto can be opened or closed, and a set piston (24), which is arranged movably in a cylinder housing (25).

10. The cooling device according to claim 9, in which the set piston (24) of each cooling air switch cylinder (20) or (31) on the one hand is charged via a spring mechanism (26) that biases the valve element (21) towards a position closing the cooling air inlet (19) or (30) of the assigned cooling air inlet channel (8) or (9), and on the other hand is chargeable with compressed air, via which the set piston (24) is movable against the force of the spring mechanism (26) from a position in which the valve element (21) closes the cooling air inlet (19) or (30) of the respectively assigned cooling air inlet channel (8) or (9), into a position in which the valve element (21) opens the cooling air inlet (19) or (30) of the assigned cooling air inlet channel (8) or (9).

11. The cooling device according to either of claims 9 or 10, in which the valve element (21) of each cooling air switch cylinder (20 and 31) is configured as a valve plate (21) and can be moved flush with an annular surface (19a) facing the cooling air switch cylinder (20 or 31) to seal the cooling air inlet (19 or 30).

12. The cooling device according to any of claims 1 to 11, in which the front cooling air inlet channel (8) is furnished with a telescopic tube (18) that is arranged between the cooling air inlet (19) and the cooling air passage (15) into the mould annealing lehr (12).

13. The cooling device according to any of claims 1 to 12, in which the neck ring cooling nozzle (33) is adjustable in the axial direction (11) of the mould (1).

## Revendications

1. Dispositif de refroidissement pour un pré-moule (1) d'une machine à verre IS pourvu d'un moule de bague (6), comportant un canal d'introduction d'air refroidissant (8) avant, qui est sollicité avec de l'air froid par une commande à soupape, un canal d'introduction d'air refroidissant (9) arrière, qui est sollicité avec de l'air froid par une commande à soupape, une chambre de refroidissement de pré-moule (12), au moyen de laquelle le niveau de pression de l'air refroidissant peut être équilibré et à travers laquelle les canaux de refroidissement (10) du pré-moule (1) sont sollicités par de l'air refroidissant et une filière froide de moule de bague (33), à travers laquelle le moule de bague (6) du pré-moule (1) est directement sollicité par de l'air refroidissant, **caractérisé en ce que** la chambre de refroidissement de pré-moule (12) est disposée sur une zone (13) du pré-moule (1) voisine du moule de bague (6) dans la direction axiale (11) du pré-moule (1).

2. Dispositif de refroidissement selon la revendication 1, dans lequel la chambre de refroidissement de pré-moule (12) présente un passage d'air refroidissant (15) sur sa paroi principale (14) qui se détourne du pré-moule (1).

3. Dispositif de refroidissement selon la revendication 2, dans lequel le passage d'air refroidissant (15) réalisé dans la paroi principale (14) de la chambre de refroidissement de pré-moule (12) est disposé à proximité de la paroi périphérique externe (16) de la chambre de refroidissement de pré-moule (12) par rapport au pré-moule (1).

4. Dispositif de refroidissement selon une des revendications 1 à 3, dans lequel la chambre de refroidissement de pré-moule (12) est raccordée au canal d'introduction d'air refroidissant avant (8).

5. Dispositif de refroidissement selon une des revendications 1 à 4, dans lequel la filière froide de moule de bague (33) est raccordée au canal d'introduction d'air refroidissant arrière (9).

6. Dispositif de refroidissement selon une des revendications 1 à 5, dans lequel un premier cylindre de commande d'air refroidissant (20), au moyen duquel la sollicitation par de l'air refroidissant du canal d'introduction d'air refroidissant avant (8) peut être commandée, est disposé à l'entrée d'air refroidissant (19) du canal d'introduction d'air refroidissant avant (8).

7. Dispositif de refroidissement selon une des revendications 1 à 6, dans lequel un deuxième cylindre de commande d'air refroidissant (31), au moyen duquel la sollicitation par de l'air refroidissant du canal d'introduction d'air refroidissant arrière (9) peut être commandée, est disposé à l'entrée d'air refroidissant (30) du canal d'introduction d'air refroidissant arrière (9).

8. Dispositif de refroidissement selon la revendication 6 ou 7, dans lequel le premier cylindre de commande d'air refroidissant (20) coordonné au canal d'introduction d'air refroidissant avant (8) et le deuxième cylindre de commande d'air refroidissant (31) coordonné au canal d'introduction d'air refroidissant arrière (9) sont commandés de manière séparée.

9. Dispositif de refroidissement selon une des revendications 6 à 8, dans lequel chaque cylindre de commande d'air refroidissant (20), respectivement (31) présente un élément de soupape (21), au moyen duquel l'entrée d'air refroidissant (19), respectivement (30) du canal d'introduction d'air refroidissant coordonné (8), respectivement (9) peut être ouverte ou fermée, et un piston de réglage (24), qui est disposé de manière à coulisser dans un logement de cylindre (25).

10. Dispositif de refroidissement selon la revendication 9, dans lequel le piston de réglage (24) de chaque cylindre de commande d'air refroidissant (20), respectivement (31) est sollicité d'une part au moyen d'un dispositif à ressort (26), qui prétensionne l'élément de soupape (21) dans le sens d'une position fermant l'entrée d'air refroidissant (19), respectivement (30) du canal d'introduction d'air refroidissant (8), respectivement (9), et est sollicité d'autre part par de l'air sous pression, au moyen duquel le piston de réglage (24) peut être réglé d'une position, à laquelle l'élément de soupape (21) ferme l'entrée d'air refroidissant (19), respectivement (30) du canal d'introduction d'air refroidissant coordonné (8), respectivement (9), contrairement à la force du dispositif à ressort (26), à une position, à laquelle l'élément de soupape (21) laisse ouverte l'entrée d'air refroidissant (19), respectivement (30) du canal d'introduction d'air refroidissant coordonné (8), respectivement (9).

11. Dispositif de refroidissement selon la revendication 9 ou 10, dans lequel l'élément de soupape (21) de chaque cylindre de commande d'air refroidissant (20, respectivement 31) est conçu comme un porte-diaphragme (21) et peut être amené en appui contre une surface annulaire (19a) de l'entrée d'air refroidissant (19, respectivement 30) tournée vers le cylindre de commande d'air refroidissant (20, respectivement 31) afin de rendre étanche l'entrée d'air refroidissant (19, respectivement 30).

12. Dispositif de refroidissement selon une des revendications 1 à 11, dans lequel le canal d'introduction d'air refroidissant avant (8) présente un tuyau télescopique (18), qui est disposé entre l'entrée d'air refroidissant (19) et le passage d'air refroidissant (15) dans la chambre de refroidissement de pré-moule (12).

13. Dispositif de refroidissement selon une des revendications 1 à 12, dans lequel la filière froide de moule de bague (33) peut être réglée dans la direction axiale (11) du pré-moule (1).
